# EUROPEAN PATENT APPLICATION

(11) **EP 1 818 568 A2**
(43) Date of publication of application: **15.08.2007**
(21) Application number: 07002854.3
(22) Date of filing: 09.02.2007
(51) Int. Cl.: F16G 5/18

(54) **Method of pretensioning power transmission chain, device for said method and power transmission apparatus**

(30) Priority: 10.02.2006 JP 2006033441
(71) Applicant: JTEKT Corporation, Osaka-shi Osaka 542-8502 (JP)
(72) Inventor: Kamamoto, Shigeo, Osaka-shi Osaka 542-8502 (JP); Kuster, Joel, Osaka-shi Osaka 542-8502 (JP); Tada, Seiji, Osaka-shi Osaka 542-8502 (JP)
(74) Representative: Weber, Joachim

(57) **Abstract**

An endless loop-like chain (1p) consists of a plurality of link plates (2), laminated, that are linked to be freely bendable by pin members (3). The endless loop-like chain (1p) is looped over each of the upper rollers and a lower roller to make up a polygon. If the chain is rotated endlessly while a tension load is imposed on the chain by each of the rollers, a pretensioned chain is obtained.

## Description

### BACKGROUND OF THE INVENTION

The present invention relates to a power transmission apparatus of a chain type continuously variable transmission or the like that is used for the vehicle and so on, a method of pretensioning a power transmission chain for use in this power transmission apparatus, and a pretensioning device for this method.

A continuously variable transmission (CVT) for the vehicle comprises an input pulley provided on the engine side, an output pulley provided on the driving wheel side, and an endless power transmission chain looped over both pulleys, for example. The power transmission chain is constituted by inserting a pin and a strip as the pin member through a pin hole provided in a link plate, in which a frictional force is generated by placing a conical sheave face of each pulley and a pin end face of the chain, for example, in some sliding contact in the peripheral direction of the sheave face, and a motive power is transmitted with this frictional force.

In manufacturing such power transmission chain, a plurality of link plates having a pair of pin holes are laminated so that the pin holes communicate, and linked with each other to be freely bendable by inserting the pins through the communicated pin holes to make an endless loop-like chain The endless loop-like chain is pretensioned to make the chain length or chain pitch uniform (e.g., refer to patent document 1).
Patent document 1: JP-A-8-74938

To pretension the endless loop-like chain as described above, conventionally, the chain is looped over two rollers spaced by a predetermined interval, and a tension load is imposed while the chain is rotated endlessly by each roller. However, in this case, since the distance between two rollers is long, and the chain needs to be rotated endlessly at high speed to shorten the working time, a large impact or vibration occurs when the chain is rotated, likely imposing an excessive tension load on the link plate and the pin member. Therefore, homogenization of the chain length and chain pitch is adversely affected, and the quality of the power transmission chain may not be stabilized.

### SUMMARY OF THE INVENTION

This invention has been achieved in the light of the above-mentioned problem, and it is an object of the invention to provide a method of pretensioning a power transmission chain in which the chain has more stable quality, a pretensioning device for use with this method, and a power transmission apparatus.

In order to accomplish the above object, the present invention provides the following technical arrangement.
(1) A method of pretensioning a power transmission chain which is an endless loop chain including a plurality of link plates which are laminated and linked to be freely bendable by pin members, the method comprising:
   looping the chain over three or more rollers constituting a polygon;
   pretensioning the chain by rotating the chain endlessly while a tension load is imposed on the chain by each of the rollers.
(2) The method according to (1), wherein misalignment between the rollers is substantially zero.
(3) The method according to (1), wherein the tension load imposed on the chain is 1.4 to 3 times a maximum load under a service condition of the power transmission chain.
(4) The method according to (1), wherein the rollers are supported in cantilevered fashion by support shafts, respectively.
(5) The method according to (4), wherein the support shafts of the rollers are almost parallel to each other when the maximum tension load is imposed on the chain.
(6) A pretensioning device for pretensioning a power transmission chain which is an endless loop chain including a plurality of link plates which are laminated and linked to be freely bendable by pin members, the pretensioning device comprising:
   three or more rollers constituting a polygon, the chain being looped over the rollers;
   a device main body that rotatably supports the rollers and shifts at least one of the rollers in an inside or outside direction of the polygon; and
   a roller driving portion that moves the at least one roller in the inside or outside direction.
(7) A power transmission apparatus comprising:
   a first pulley having a conical sheave face;
   a second pulley having a conical sheave face; and
   a power transmission chain for transmitting power between the first and second pulleys owing to a frictional force, wherein the power transmission chain is looped over the first and second pulleys to be in contact with each sheave face of the first and second pulleys, and the power transmission chain is pretensioned by the pretensioning method according to any one of (1) to (5).

With the above method of the invention, since the endless loop-like chain is looped over three or more rollers to make up a polygon, and pretensioned, the distance between the rollers over which the chain is looped is shorter than where the chain is conventionally looped over two rollers. Therefore, an impact or vibration of the chain during the rotation is reduced, preventing excessive tension load from being imposed on the link plate and the pin member, and making the chain length or chain pitch more uniform.

With the above method of the invention, when the tension load is imposed, a compressive residual load occurs on each link plate, but if the misalignment of any of the rollers is almost zero, the compressive residual stress of each link plate is more uniform.

With the above method of the invention, the tension load imposed on the endless loop-like chain is sufficient to make the chain length or chain pitch uniform, and the metal fatigue is suppressed, whereby the deformation or shape corruption of the power transmission chain is prevented.

With the above method of the invention, the endless loop-like chain is easily attached or detached to or from each roller, whereby a plurality of chains can be pretensioned efficiently.

In the case where each of the rollers is supported in cantilevered fashion, if the support shafts of the rollers are out of parallel when the endless loop-like chain is rotated, the uniformity of the compressive residual stress is adversely affected by elastic deformation. Thus, if the support shafts of the rollers are almost parallel at the maximum tension load, the compressive residual stress produced in each link plate is more uniform.

With the above pretensioning device of the invention, since the endless loop-like chain is rotated endlessly by three or more rollers to make up a polygon, the distance between the rollers over which the chain is looped is shorter than the conventional one. Therefore, an impact or vibration of the chain during rotation is reduced, preventing excessive tension load from being imposed on the link plate or pin member and making the chain length or chain pitch more uniform. Thereby, the quality of the power transmission chain is more stable.

With the above power transmission apparatus of the invention, since the quality of the power transmission chain is stable, the power transmission can be effected stably for the long term.

With the method and device for pretensioning the power transmission chain according to the invention, since excessive tension load is not imposed on the link plate and the pin member, the chain length or chain pitch is more uniform, whereby the quality is stabilized. With the power transmission apparatus of the invention, the power transmission chain is pretensioned by the pretensioning method, whereby the power transmission can be effected stably for the long term.

### BRIEF DESCRIPTION OF THE DRAWINGS

Fig. 1 is a perspective view showing a state where a power transmission chain is looped over an input pulley and an output pulley.
Fig. 2 is a cross-sectional view showing the essential constitution in which the power transmission chain is looped over the input pulley.
Fig. 3 is a perspective view typically showing the essential constitution of the chain.
Fig. 4 is a cross-sectional view showing a state where a link is provided with a pin and a strip.
Fig. 5 is a front view of a 3-cylinder preload device.
Fig. 6 is a front view of an essential part of the 3-cylinder preload device.
Fig. 7 is a cross-sectional view near the upper roller or lower roller.

### DETATLED DESCRIPTION OF PREFERRED EMBODIMENTS

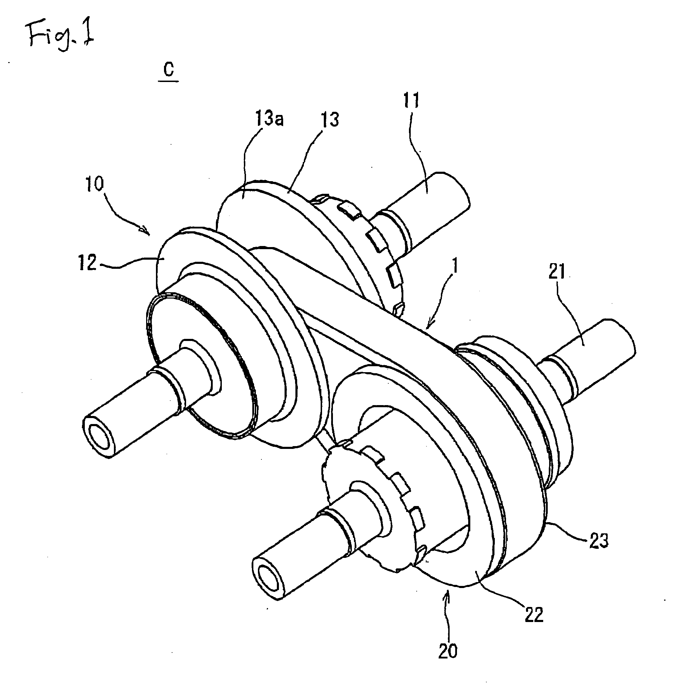

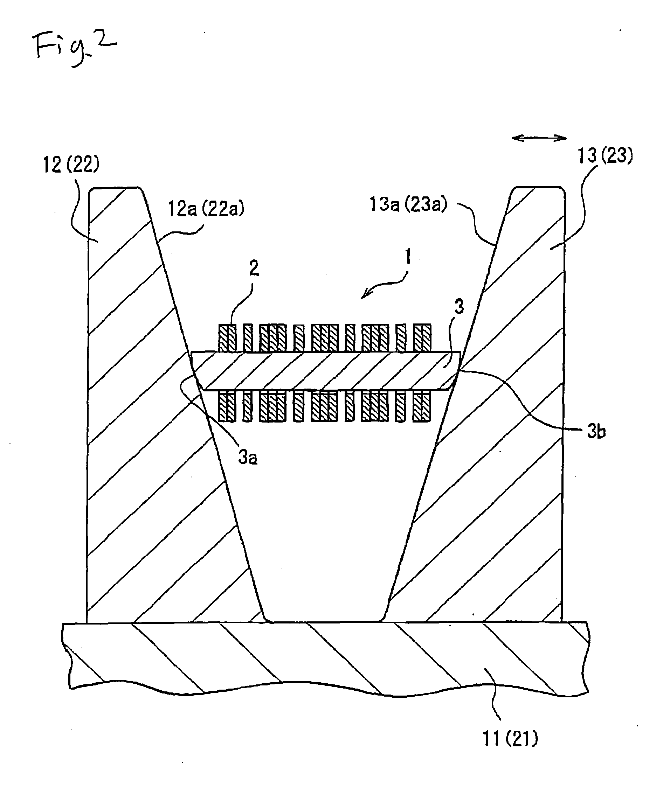

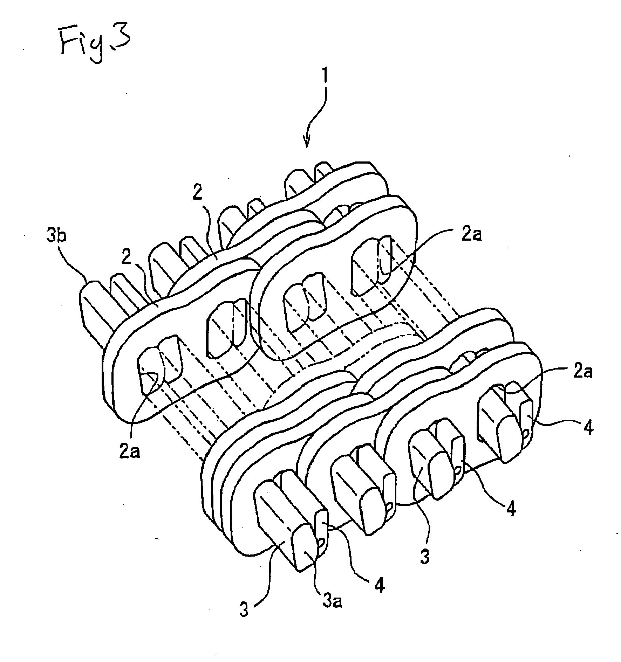

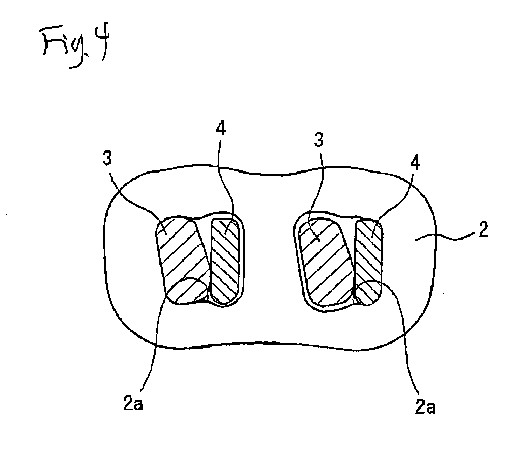

The embodiments of the present invention will be described below with reference to the accompanying drawings. Figs. 1 and 2 show a chain type continuously variable transmission C (hereinafter simply referred to as a "continuously variable transmission") in a power transmission apparatus according to the embodiment of the invention. Figs. 3 and 4 show a power transmission chain 1 (hereinafter simply referred to as a "chain") used for the continuously variable transmission C. The continuously variable transmission C according to this embodiment is mounted on an automobile, for example, and comprises an input pulley 10 made of metal (structural steel) as the first pulley, an output pulley 20 made of metal (structural steel) as the second pulley, and the power transmission chain 1 looped over those pulleys.

The input pulley 10 is attached around an input shaft 11 connected on the engine side so as to be rotatable together, and comprises a fixed sheave 12 having a conical inclined face 12a, and a movable sheave 13 having a conical inclined face 13a opposed to the inclined face 12a. And a V-shape groove is formed by the inclined faces 12a and 13a of those sheaves, and the chain 1 is carried and held in the groove under strong pressure. The movable sheave 13 is connected to a hydraulic actuator (not shown) for changing the groove width. The groove width can be changed by moving the movable sheave 13 during variable speed, thereby moving the chain 1 to change the winding radius of the chain 1 around the input shaft 11.

On the other hand, the output pulley 20 is attached around the output shaft 21 connected on the driving wheel side so as to be rotatable together, and comprises a fixed sheave 23 and a movable sheave 22 having an inclined face for forming a groove carrying the chain 1 under strong pressure, in the same manner as the input pulley 10. In the same manner as the movable sheave 13 of the input pulley 10, the movable sheave 22 of the pulley 20 is connected to a hydraulic actuator (not shown), and the groove width can be changed by moving the movable sheave 13 axially during variable speed, thereby moving the chain 1 to change the winding radius of the chain 1 around the output shaft 21.

In the continuously variable transmission with the above constitution according to the embodiment, the continuously variable speed can be made in the following manner. That is, to decrease the rotation of the output shaft 21, the groove width on the side of the input pulley 10 is expanded by moving the movable sheave 13, making the winding radius of the chain 1 around the input shaft 11 smaller with the pin end faces 3a, 3b of the chain 1 being placed in sliding contact in the inside direction of the conical sheave faces 12a and 13a under the boundary lubrication condition, while the groove width on the side of the output pulley 20 is contracted by moving the movable sheave 22, making the winding radius of the chain 1 around the output shaft 21 larger with the pin end faces 3a and 3b of the chain 1 being placed in sliding contact in the outside direction of the conical sheave faces 22a and 23a under the boundary lubrication condition.

In this manner, the rotation of the output shaft 21 can be decreased. On the other hand, to increase the rotation of the output shaft 21, the groove width on the side of the input pulley 10 is contracted by moving the movable sheave 13, making the winding radius of the chain 1 around the input shaft 11 larger with the pin end faces 3a and 3b of the chain 1 being placed in sliding contact in the outside direction of the conical sheave faces 12a and 13a under the boundary lubrication condition, while the groove width on the side of the output pulley 20 is expanded by moving the movable sheave 22, making the winding radius of the chain 1 over the output shaft 21 smaller with the pin end faces 3a and 3b of the chain 1 being placed in sliding contact in the inside direction of the conical sheave faces 22a and 23a under the boundary lubrication condition. In this manner, the rotation of the output shaft 21 can be increased.

The chain 1 looped over the input pulley 10 and the output pulley 20 will be described below. This chain 1 includes a plurality of link plates 2 made of metal (carbon steel) as the chain components, a plurality of pins (referred to as the first pin) 3 made of metal (bearing steel) as the pin members for connecting the link plates 2, and the strips (referred to as the second pin or interpiece) 4 as the pin members that are slightly shorter than the pins 3. In Fig. 1, a middle portion of the chain 1 in the width direction is partially omitted in the drawing.

The link plate 2 has a curvilinear shape with smooth visible outline, with two pin holes 2a provided for each link plate. All the link plates are formed in the almost same outer shape. The pin 3 connecting the link plates 2 is a rod having the side face along the inner circumferential face of the pin hole 2a. All the pins 3 are formed in the almost same shape. The pin end faces 3a and 3b have a convex curved face set at a predetermined curvature, and make contact with both the pulleys to transmit power. The strip 4 is a rod formed to be slightly shorter than the pin 3, and having the side face along the inner circumferential face of the pin hole 2a. All the strips are formed in the almost same shape. The pins 3 and the strips 4 are inserted through the pin holes 2a of the plurality of link plates 2 overlapped, so that the link plates 2 are connected to be freely bendable.

One of the pin 3 and the strip 4 inserted through one pin hole 2a is press fit into this pin hole 2a, and the other is inserted rotatably in a rolling contact with one side face. The other is press fit into the pin hole 2a of another link plate 2 adjacently overlapped with the link plate 2, and the one of the pin and the strip is inserted rotatably into the pin hole 2a of another link plate 2. In this manner, one of the pin 3 and the strip 4 is press fit into the pin hole 2a, and the other is inserted rotatably into the pin hole 2a, so that the link plates 2 are connected with each other to be freely bendable. In the above manner, the link plates 2 overlapped are connected to be freely bendable, and laminated to constitute the bendable chain 1.

Since each link plate 2 making up the chain 1 has a working tolerance, there is unevenness in quality because the length or chain pitch of the chain 1 manufactured is unsteady, and a different force is imposed on each link plate 2 when in use. Therefore, in a manufacturing process, the plurality of link plates 2 are laminated, and the pins 3 and the strips 4 are inserted through the pin holes 2a to connect the plurality of link plates 2 with each other to be freely bendable to produce an endless loop-like chain 1p, which is then pretensioned.

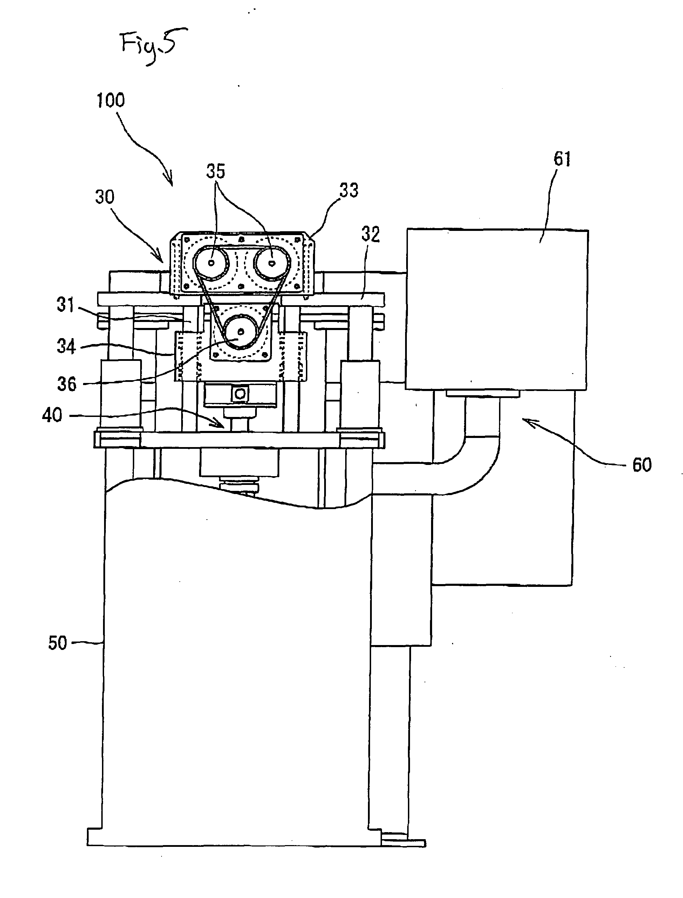

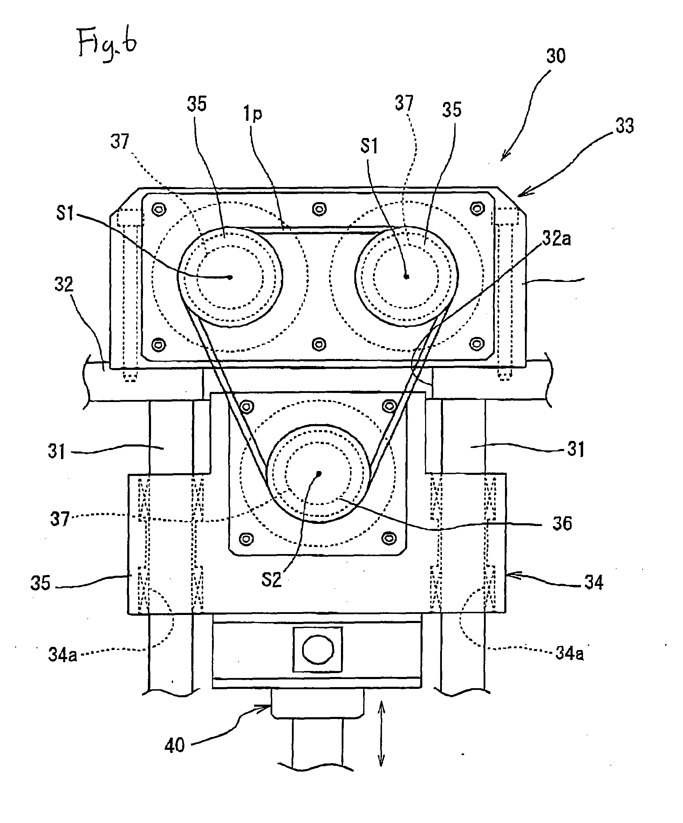

Fig. 5 is a front view of a 3-cylinder preload device 100 as a pretensioning device for pretensioning the chain 1p. This device 100 comprises a device main body 30, a hydraulic system 40 (roller driving portion) located under the device main body 30, a frame portion 50, and a control unit 60 disposed beside the device main body 30. As shown in Fig. 6, the device main body 30 comprises the guide posts 31 stood on both left and right sides of the frame portion 50, a stationary support plate 32 provided at the upper end of the guide posts 31, a fixed portion 33 fixed to this stationary support plate 32, a lift portion 34 located under the fixed portion 33, two upper rollers 35 provided in the fixed portion 33, and a lower roller 36 provided in the lift portion 34. The two upper rollers 35 are supported at the same height position, and the lower roller 36 is supported at a lower position corresponding to the central part between the two upper rollers 35. These upper rollers 35 and the lower roller 36 are arranged so that the chain 1p looped over the rollers 35 and 36 may make up a substantial triangle in front view.

The insertion holes 34a are formed on both left and right sides of the lift portion 34. Each of the guide posts 31 is inserted through this insertion hole 34a, so that the lift portion 34 can vertically contact or leave the fixed portion 33. Accordingly, the lift portion 34 is moved up or down (in the inside or outside direction of the triangle) by the hydraulic system 40 provided below the lift portion 34, so that the distance between the upper rollers 35 provided in the fixed portion 33 and the lower roller 36 provided in the lift portion 34 is changed. An introduction opening 32a is formed in the central part of the stationary support plate 32, in which if the lift portion 34 ascends, its upper part enters this introduction opening 32a.

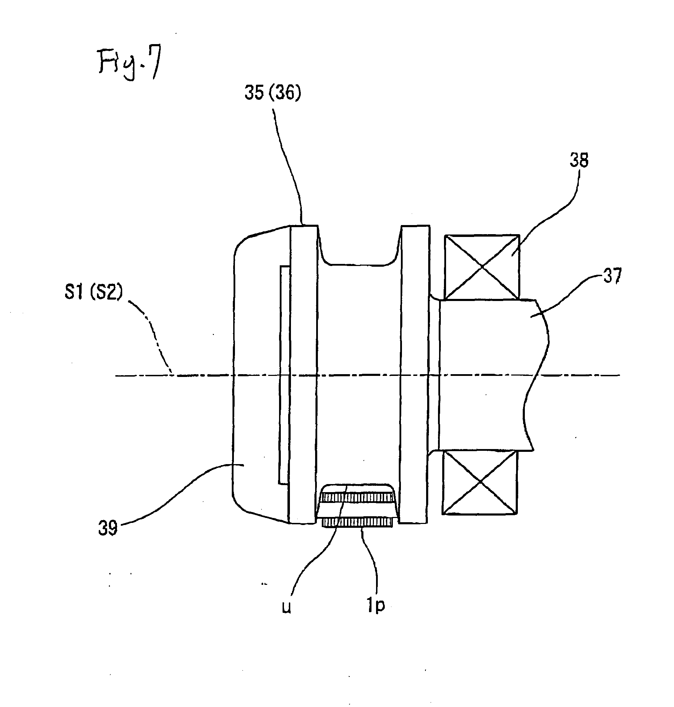

The upper rollers 35 and the lower roller 36 are integrally formed at the top end of the support shaft 37, as shown in Fig. 7. The support shaft 37 is supported rotatably by a bearing 38 within the lift portion 34 in the fixed portion 33. Thereby, the upper rollers 35 and the lower portion 36 are supported in cantilevered fashion to be rotatable around the shaft lines s1 and s2. The fixed portion 33 is provided with a roller driving portion, not shown. The upper rollers 35 are rotated by this roller driving portion. A guide cap 39 is provided at the top end of the upper rollers 35 and the lower roller 36, making it easier to attach the chain 1p. The control unit 60 controls the hydraulic system 40 and the roller driving portion to move up or down the lower roller 36, and rotate the upper rollers 34. A control panel 61 of the control unit 60 is provided with the buttons for driving or stopping the hydraulic system 40 and the roller driving portion, and a rotation speed indicator of the upper rollers 35 and the lower roller 36.

Each of the upper rollers 35 and the lower roller 36 is provided with a U-shape groove u for looping the chain 1p. The groove u is fixed, but may be variable in width by using a hydraulic pressure or mechanical screw. If the chain 1p is looped in the groove u over the upper rollers 35 and the lower roller 36, and the lower roller 36 is moved down in this state, a tension load is imposed on the chain 1p. A falling range of the lower roller 36 is adjusted so that the tension load may be 1.4 to 3 times the maximum load under the service condition of the chain 1.
Each of the upper rollers 35 and the lower roller 36 is arranged so that the misalignment of each of the rollers 35 and 36 may become almost zero by adjusting the mutual position or inclination of the rollers 35 and 36, and inclined beforehand outwards in free state so that their support shafts 37 become almost parallel to each other when the tension load imposed on the chain 1p is maximum. That is, if the tension load is imposed on the looped chain 1p, each of the upper rollers 35 and the lower roller 36 is warped inwards, and when the tension load is maximum, the shaft lines s1 and s2 of the support shafts 37 for the rollers 35 and 36 are parallel to each other.

The chain 1p looped over the upper rollers 35 and the lower roller 36 is rotated so that the bending angle between the link plates 2 may be from -5% to +5% of the maximum bending angle under the actual service condition. That is, each link plate 2 is bent at an angle from 105% of the maximum bending angle under the actual service condition to 5% of the maximum bending angle in its reverse direction (outwards) from the linear state of chain. Specifically, in a case where the chain length is from 650mmm to 660mm, the bending angle between the link plates 2 is from 18.5° in its normal direction to 5° in its reverse direction.

A method for pretensioning the chain 1 using the 3-cylinder preload device 100 will be specifically described below.
First of all, the lower roller 36 is moved up along with the lift portion 34, and the chain 1p is looped in the groove u over the two upper rollers 35 and the lower roller 36. And the lower roller 36 is moved down to stretch the chain 1p. Then, the upper rollers 35 are rotated, and at the same time the lower roller 36 is further moved down by a predetermined distance from the upper rollers 35, whereby the chain 1p is rotated endlessly with a tension load being imposed on the chain 1p. The chain 1p is rotated endlessly for a few cycles at a peripheral speed at which the number of rotations of the roller normally used for pretensioning is 1000rpm or less, for example. That is, in this embodiment, a tension load is securely imposed on the chain 1p at a slower peripheral speed and a smaller number of rotations than conventionally, thereby securely producing a plastic deformation in a required portion of the link plate 2 contacted by the pin 3 and the strip 4 and developing a compressive residual stress. The number of rotations of the roller is preferably from 20 to 100rpm to suppress the vibration and impact of the chain 1p. The number of rotations of the chain 1p is preferably 7 cycles or less, and more preferably one cycle. If rotating the chain 1p is ended, the rotation of the upper rollers 35 is stopped, the lower roller 36 is moved up along with the lift portion 34, and the chain 1p is detached from each of the rollers 35 and 36, whereby the chain 1 under pretension is obtained.

With the above pretensioning method according to the embodiment, if the chain 1p is pretensioned, a required portion of the link plate 2 contacted by the pin 3 and the strip 4 and its corresponding required portion of the pin 3 and the strip 4 are subjected to plastic deformation to increase a deformation resistance of the link plate 2 and further develop a compressive residual stress in the required portion, resulting in a so-called shake down state where metal fatigue is prevented. Particularly, with the pretensioning method according to this embodiment, firstly, a tension load is imposed by three rollers 35 and 36, the distance between the upper rollers 35 and the distance from the upper rollers 35 to the lower roller 36 in the looped chain 1p are shorter than where two rollers are conventionally employed. Secondly, the peripheral speed of the chain 1p is so slow that the impact or vibration when the chain 1p is rotated is reduced. In a press fit type chain in which the pin member is press fit into the pin hole 2a as in this embodiment, the uniform deformation of the press fit portion is especially effective for noise reduction when using the chain.

Accordingly, when pretension is applied, no excessive tension load is imposed on each link plate 2, each pin 3 and each strip 4. Thereby, the length or chain pitch of the chain 1 is more uniform, whereby the quality of the chain 1 is more stable. At the same time, metal fatigue is suppressed, so that the chain life can be improved. The endless rotation in applying a pretension is preferably 7 cycles or less for more stable quality and longer life of the chain, and more preferably 3 cycles or less. When the chain 1p is rotated endlessly only once, a tension load effective for each link plate 2 can be imposed on all the linear and bent portions of the chain 1p during rotation, whereby the pretension can be applied efficiently. Moreover, since the number of pretensioning is minimum, no excess tensile force caused by vibration is imposed, whereby the quality is more stable.

Since each of the upper rollers 35 and the lower roller 36 is supported in cantilevered fashion, the chain 1p is easily attached or detached to or from each of the upper rollers 35 and the lower roller 36, whereby the workability in pretensioning the chain 1p is improved. Since the upper rollers 35 and the lower roller 36 are arranged so that the misalignment of each of the upper rollers 35 and the lower roller 36 may be almost zero, it is possible to suppress unevenness in the compressive residual stress produced in each link plate 2 caused by the misalignment. Further, if the looped chain 1p is rotated and a tension load is imposed, each of the upper rollers 35 and the lower roller 36 is warped inwards, so that the support shafts s1 and s2 become parallel at the maximum tension load, whereby it is possible to suppress unevenness in the compressive residual stress produced in each link plate 2 caused by the inclination of each of the upper rollers 35 and the lower roller 36.

Since the tension load imposed on the chain 1p is 1.4 to 3 times the maximum load under the actual service condition of the chain 1, the pretension of the chain 1p is sufficient to make the chain length or chain pitch uniform, whereby it is possible to suppress the deformation or getting out of shape of the chain 1 by minimizing metal fatigue.
Since the chain 1p is rotated so that the rotation angle of each link plate 2 may be from -5% to +5% of the maximum rotation angle under the actual service condition, the compressive residual stress on each link plate 2 can be produced without imposing excessive tension load on each link plate 2, whereby the life of the chain 1 can be increased effectively.

Since the power transmission apparatus of this embodiment employs the power transmission chain 1 with greater life and more stable quality, it is possible to transmit power for the long term stably. The power transmission apparatus of this invention is not limited to the form in which the groove width of both the input pulley 10 and the output pulley 20 is variable, but the groove width may be variable for one of the pulleys but invariable or fixed for the other. Though in the above embodiment the groove width is continuously varied, the invention may be applied to any other power transmission apparatus in which the groove width is varied at stages or fixed.

' In the pretensioning method of this embodiment, the preload device 30 having three rollers 32 is employed, but three or more rollers to make up one polygon may be arranged. For example, the preload device having four rollers arranged in the shape of square may be employed to pretension the chain. The pin member making up the chain may be composed of a pin main body and a contact member provided at either end of the pin main body. Moreover, it is appreciated that the chain may be the type in which the pin and the strip as the pin members (pin-strip; pin-pin) are not press fit into the link plate, the type in which the pin member is composed of two pins and the end faces of both pins are contact with the sheave face of the pulley to transmit power, or the block type in which the block members are provided to carry the laminated link plate between them.

## Claims

1. A method of pretensioning a power transmission chain which is an endless loop chain including a plurality of link plates which are laminated and linked to be freely bendable by pin members, the method comprising:
looping the chain over three or more rollers constituting a polygon;
pretensioning the chain by rotating the chain endlessly while a tension load is imposed on the chain by each of the rollers.

2. The method according to claim 1, wherein misalignment between the rollers is substantially zero.

3. The method according to claim 1, wherein the tension load imposed on the chain is 1.4 to 3 times a maximum load under a service condition of the power transmission chain.

4. The method according to claim 1, wherein the rollers are supported in cantilevered fashion by support shafts, respectively.

5. The method according to claim 4, wherein the support shafts of the rollers are almost parallel to each other when the maximum tension load is imposed on the chain.

6. A pretensioning device for pretensioning a power transmission chain which is an endless loop chain including a plurality of link plates which are laminated and linked to be freely bendable by pin members, the pretensioning device comprising:
three or more rollers constituting a polygon, the chain being looped over the rollers;
a device main body that rotatably supports the rollers and shifts at least one of the rollers in an inside or outside direction of the polygon; and
a roller driving portion that moves the at least one roller in the inside or outside direction.

7. A power transmission apparatus comprising:
a first pulley having a conical sheave face;
a second pulley having a conical sheave face; and
a power transmission chain for transmitting power between the first and second pulleys owing to a frictional force, wherein the power transmission chain is looped over the first and second pulleys to be in contact with each sheave face of the first and second pulleys, and the power transmission chain is pretensioned by the pretensioning method according to any one of claims 1 to 5.
